# FASCICULE DE BREVET EUROPEEN

(11) **EP 2 158 393 B1**
(45) Date de publication et mention de la délivrance du brevet: **02.01.2019**
(21) Numéro de dépôt: 08806100.7
(22) Date de dépôt: 26.06.2008
(51) Int. Cl.: F02D 35/02, F02D 41/14, F02D 41/40

(54) **PROCEDE ET DISPOSITIF DE COMMANDE D'INJECTIONS D'UN MOTEUR, VEHICULE AUTOMOBILE MUNI DU DISPOSITIF**
VERFAHREN UND VORRICHTUNG ZUR STEUERUNG DER EINSPRITZUNG IN EINEN MOTOR SOWIE MIT EINER SOLCHEN VORRICHTUNG AUSGESTATTETES FAHRZEUG
METHOD AND DEVICE FOR CONTROLLING INJECTION IN AN ENGINE, AND AUTOMOBILE FITTED WITH SUCH DEVICE

(30) Priorité: 27.06.2007 FR 0704604
(43) Date de publication de la demande: 03.03.2010
(73) Titulaire: Renault S.A.S., 92100 Boulogne-Billancourt (FR)
(72) Inventeur: PAQUIEN, Marc, F-92190 Meudon (FR); GAUTIER, Fabrice, F-94110 Arcueil (FR); SORIANO, Ronald, F-92340 Bourg La Reine (FR)
(86) Numéro de dépôt international: PCT/FR2008/051171
(87) Numéro de publication internationale: WO 2009/007609

(56) Documents cités:
- EP-A- 1 128 050
- EP-A- 1 607 609
- DE-A1- 10 343 069
- JP-A- 2005 171 775

## Description

L'invention concerne un procédé de commande des injections d'un moteur à combustion interne ayant plusieurs injections par cycle pour au moins un cylindre.

Un domaine d'application de l'invention est les moteurs à combustion interne à allumage par compression, tels que par exemple les moteurs Diesel.

Les moteurs Diesel comportent une injection pilote précédant une injection principale dans les cylindres à chaque cycle thermodynamique.

On a constaté que dans ce type de moteurs, le dégagement violent d'énergie lors du début de la combustion provoque un bruit important de combustion sur une plage de fréquence allant de 1000 à 4000 Hz environ.

Le document JP-A-2004 044417 prévoit de réduire ce bruit de combustion par l'injection pilote, en calculant une variation du bruit de combustion et en déterminant à partir de cette variation si la quantité émise d'injection pilote de chaque cylindre est appropriée ou non.

Le document JP-A-08 334049 décrit un système pour réduire le bruit de combustion en contrôlant l'injection sur la base d'un signal d'un moyen de détection de condition opératoire du moteur et de signaux de différentes bandes de fréquence d'un moyen de détection de pression interne d'un cylindre. La somme d'une valeur maximum d'un signal de tension d'un filtre passe-bande haut, d'une valeur minimum d'un signal de tension d'un filtre passe-bande bas et d'aune autre valeur est utilisée pour être comparée à une valeur prescrite. Dans le cas où cette somme n'est pas inférieure à la valeur prescrite, une valeur de décalage temporel est ajoutée au phasage de l'injection. La publication EP 1 607 609 constitue un autre document pertinent de l'état de l'art.

Ces solutions ne permettent pas de lutter efficacement contre le bruit de combustion, et pénalisent de manière conséquente les prestations dépollution et consommation d'une part (contrainte lors de la mise au point énergétique), et la masse du groupe moto-propulseur et/ou véhicule en cas d'utilisation d'écrans d'autre part.

L'invention vise à obtenir un procédé de commande des injections d'un moteur à combustion interne ayant plusieurs injections par cycle et un véhicule automobile muni de ce moteur, qui pallient les inconvénients de l'état de la technique.

A cet effet, un premier objet de l'invention est un procédé de commande des injections d'un moteur à combustion interne, ayant un motif de commande d'injection comportant au moins une première injection et une deuxième injection par cycle thermodynamique pour la chambre de combustion d'au moins un des cylindres du moteur,
dans lequel un capteur associé audit cylindre fournit un signal représentatif de la pression dans la chambre de combustion de celui-ci,
caractérisé en ce que
le motif de commande comportant un phasage temporel prescrit entre deux injections du même cycle,
il est prescrit à un calculateur au moins une fréquence critique ou un domaine fréquentiel critique de la pression dans le cylindre,
le calculateur utilise l'information spectrale dudit signal de pression pour modifier le phasage temporel entre deux injections, de manière à ce qu'au moins un pic d'excitation spectrale de pression soit éloigné de ladite fréquence critique ou dudit domaine fréquentiel critiques.

Suivant d'autres caractéristiques de l'invention,
- le phasage temporel entre deux injections est modifié pour que ledit pic d'excitation spectrale de la pression de combustion soit éloigné de plus d'une distance prescrite de ladite fréquence critique ou domaine fréquentiel critique.
- le calculateur analyse le spectre fréquentiel du signal de la pression de combustion correspondant à toutes les injections d'une combustion numéro i, pour déterminer au moins une fréquence d'au moins un maximum de ce spectre, cette fréquence étant égale au pic d'excitation spectrale de la pression de combustion.
- pour modifier le phasage temporel entre deux injections avant la combustion numéro i+1, le calculateur effectue une comparaison de la fréquence du pic d'excitation spectrale de la pression de combustion à ladite fréquence critique ou audit domaine fréquentiel critique.
- ladite fréquence critique ou dudit domaine fréquentiel critique correspond à une fréquence prédéterminée de faiblesse de structure du groupe moto - propulseur comportant le moteur.
- le motif de commande comportant ledit phasage temporel prescrit entre deux injections est généré par une unité de commande à partir d'une cartographie du moteur.
- pour ladite modification, le calculateur émet une commande de modification (la modification peut être recalculée en fonction de la proximité entre la fréquence du pic d'excitation et la fréquence de faiblesse) du phasage entre deux injections dans le même cycle, qui est ajoutée au motif de commande des injections en grandeur de consigne pour modifier le phasage entre deux injections dans la chambre de combustion dans le même cycle numéro i+1.
- la modification du phasage entre les première et deuxième injections est inférieure ou égale à 5 °, de préférence inférieure ou égale à 3°, de préférence encore inférieure ou égale à 2° d'angle de vilebrequin du moteur.

Un autre objet de l'invention est un dispositif de commande des injections d'un moteur à combustion interne, pour la mise en oeuvre du procédé tel que décrit ci-dessus, caractérisé en ce qu'il comprend
une unité de commande pour la génération d'un motif de commande d'injection comportant au moins une première injection et une deuxième injection par cycle thermodynamique pour la chambre de combustion d'au moins un des cylindres du moteur, ce motif de commande comportant un phasage temporel prescrit entre les première et deuxième injections,
un capteur associé audit cylindre pour la fourniture d'un signal représentatif de la pression de combustion dans la chambre de combustion de celui-ci,
une mémoire d'enregistrement d'au moins une fréquence critique ou d'un domaine fréquentiel critique de la pression de combustion du cylindre, des moyens d'analyse du spectre fréquentiel du signal de la pression de combustion correspondant aux injections d'un cycle, pour déterminer au moins une fréquence d'au moins un maximum de ce spectre, cette fréquence étant égale au pic d'excitation spectrale de la pression de combustion, des moyens de comparaison de la fréquence du pic d'excitation spectrale de la pression de combustion à ladite fréquence critique ou audit domaine fréquentiel critique,
des moyens d'émission d'une commande de modification prescrite du phasage entre deux injections, qui est ajoutée au motif de commande des injections en grandeur de consigne pour modifier le phasage entre deux injections dans la chambre de combustion dans le même cycle, de manière à ce que le pic d'excitation spectrale la pression de combustion soit éloigné de ladite fréquence critique ou dudit domaine fréquentiel critique.

Un autre objet de l'invention est un véhicule automobile comportant un moteur à combustion interne, comportant au moins un cylindre muni d'au moins un injecteur de carburant dans la chambre de combustion du cylindre et d'un dispositif de commande de l'injecteur suivant une première injection pilote et une deuxième injection principale, caractérisé en ce que le dispositif de commande est tel que décrit ci-dessus.

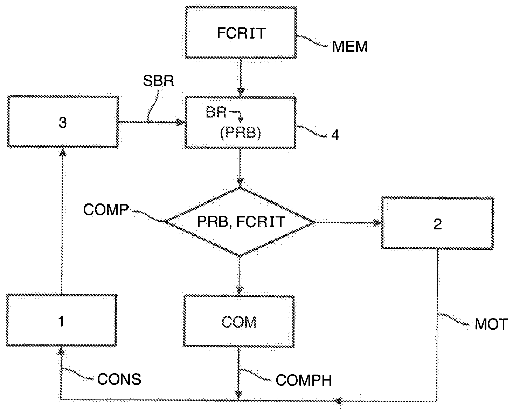

L'invention sera mieux comprise à la lecture de la description qui va suivre, donnée uniquement à titre d'exemple non limitatif en référence aux dessins annexés, sur lesquels la figure unique représente un synoptique modulaire du dispositif de commande des injections d'un moteur suivant un mode de réalisation de l'invention.

Le moteur sur lequel est mis en oeuvre le procédé suivant l'invention est rotatif et comporte plusieurs cylindres ayant chacun une chambre de combustion, désignée par la référence 1 à la figure. Le véhicule automobile sur lequel se trouve le moteur est notamment un véhicule routier propulsé à partir de ce moteur. Chaque cylindre comporte par exemple un injecteur pour injecter du carburant dans sa chambre de combustion. Ainsi que cela est connu, une unité de commande 2 est prévue pour générer un motif MOT de commande d'injection qui est envoyé à l'injecteur. Ainsi que cela est connu, ce motif MOT de commande comporte, pour chaque cycle thermodynamique ou mécanique du moteur, une première consigne de quantité de carburant à injecter par une injection pilote, un premier instant d'injection pour l'injection pilote, une deuxième consigne de quantité de carburant à injecter par une injection principale, un deuxième instant d'injection pour l'injection principale. Le premier instant d'injection pour l'injection pilote précède le deuxième instant d'injection pour l'injection principale et forme avec ce deuxième instant d'injection pour l'injection principale un phasage entre la première injection pilote et la deuxième injection principale. Le motif MOT de commande d'injection est généré par l'unité 2 sur la base par exemple d'une cartographie préenregistrée du moteur en fonction de grandeurs du moteur, comme par exemple la vitesse de rotation du moteur (N), sa charge, sa température, ou autres. Par conséquent, l'unité 2 détermine en temps réel le motif MOT de commande des injections à appliquer au cylindre 1 à chaque cycle, ce motif MOT de commande pouvant donc varier selon les paramètres variables de la cartographie.

Un ou plusieurs capteurs 3 sont prévus sur ou dans la chambre 1 de combustion pour fournir un signal SBR permettant de détecter le bruit de combustion (ou de la pression de combustion) régnant dans la chambre 1 de combustion du cylindre. Ce capteur 3 est par exemple formé par un capteur de pression dans la chambre 1 de combustion du cylindre ou par un accéléromètre à proximité plus ou moins immédiate du cylindre.

Suivant l'invention, on a préenregistré une fréquence critique ou domaine fréquentiel critique du bruit de combustion (ou de la pression de combustion) dans la chambre 1 de combustion du cylindre, cette fréquence critique ou domaine fréquentiel critique étant une valeur de fréquence en Hz ou une plage de fréquence en Hz et étant appelé globalement fréquence critique FCRIT dans ce qui suit.

L'inventeur a constaté que le bruit aérien, rayonné en dehors du cylindre en fonctionnement, présentait de grandes variations selon le motif MOT de commande des injections pour un même type de cylindres. Ces grandes variations de bruit s'expliquent en grande partie par cette fréquence critique FCRIT, du fait par exemple de faiblesses de structure.

Suivant l'invention, un calculateur 4 est prévu pour analyser le spectre BR du bruit de combustion (ou de la pression de combustion) du signal SBR fournit par le capteur 3, des moyens de traitement du signal SBR fourni par le capteur 3 étant prévus. Le calculateur 4 est par exemple formé par l'unité centrale de commande (ECU) embarquée du véhicule automobile, cette unité centrale comportant également l'unité de commande 2. La fréquence critique FCRIT est mémorisée dans une mémoire MEM associée au calculateur 4 par exemple.

Le calculateur 4 compare le spectre BR du bruit de combustion (ou de la pression de combustion) détecté dans le cylindre à la fréquence critique FCRIT, ainsi que représenté par le signe de référence COMP à la figure.

Le calculateur 4 calcule par exemple à partir du signal SBR le ou les pics PBR d'excitation fréquentielle maximaux dans le spectre BR du bruit de combustion (ou de la pression de combustion), c'est-à-dire la ou les fréquences correspondant à des valeurs maximales (par exemple en dB) de ce spectre BR.

Le calculateur 4 détermine si le ou les pics PBR d'excitation fréquentielle maximaux du spectre BR sont égaux à la fréquence critique FCRIT ou appartiennent au domaine fréquentiel critique FCRIT.

Lorsqu'il a été déterminé par le calculateur 4 que le ou les pics PBR d'excitation fréquentielle maximaux du spectre BR sont égaux à la fréquence critique FCRIT ou appartiennent au domaine fréquentiel critique FCRIT, le calculateur 4 émet par un moyen COM une commande COMPH de modification prescrite du phasage entre deux injections dans le même cycle. Cette commande COMPH de modification du phasage des injections est ajoutée au motif MOT de commande des injections pour modifier le phasage envoyé en grandeur CONS de consigne à l'injecteur et ainsi modifier le phasage entre deux injections dans la chambre 1 de combustion dans le même cycle, ainsi que cela est représenté par la boucle fermée à la figure. La commande COMPH de modification du phasage des injections est calculée pour éloigner le pic PBR d'excitation de la fréquence critique FCRIT ou du domaine fréquentiel critique FCRIT. Par exemple, il est préenregistré dans le calculateur 4 une distance prescrite que doit respecter le pic PBR par rapport à la fréquence critique FCRIT ou au domaine fréquentiel critique FCRIT par cette commande COMPH de modification du phasage des injections.

Une très légère augmentation ou diminution du phasage MOT par la commande COMPH, dans la plupart des cas n'excédant pas 1 ° à 2 ° d'angle de vilebrequin, mais pouvant aller jusqu'à 5° d'angle de vilebrequin, a permis d'éviter la fréquence critique FCRIT.

Lorsqu'il a été déterminé par le calculateur 4 que le ou les pics PBR d'excitation fréquentielle maximaux du spectre BR ne sont pas égaux à la fréquence critique FCRIT ou n'appartiennent pas au domaine fréquentiel critique FCRIT, le calculateur 4 n'émet pas de commande COMPH de modification de phasage des injections, et la grandeur CONS de consigne envoyée à l'injecteur dans le même cycle est égale au motif MOT de commande pris comme référence.

Bien entendu, les moyens exposés ci-dessus de l'invention peuvent être prévus pour l'un, plusieurs ou tous les cylindres du moteur.

L'invention permet ainsi de prendre en compte les défauts de la structure du groupe moto-propulseur et de les éviter, sans trop contraindre le secteur mise au point énergétique, et d'améliorer le compromis consommation / dépollution / bruit ambiant.

## Revendications

1. Procédé de commande des injections d'un moteur à combustion interne, ayant un motif de commande d'injection comportant au moins une première injection et une deuxième injection par cycle thermodynamique pour la chambre (1) de combustion d'au moins un des cylindres du moteur,
dans lequel un capteur (3) associé audit cylindre fournit un signal (SBR) représentatif de la pression de combustion dans la chambre (1) de combustion de celui-ci,
**caractérisé en ce que**
le motif de commande (MOT) comportant un phasage temporel prescrit entre deux injections,
il est prescrit à un calculateur (4) au moins une fréquence critique ou un domaine fréquentiel critique (FCRIT) de la pression de combustion du cylindre,
le calculateur utilise l'information spectrale dudit signal (SBR) de la pression de combustion pour modifier (COMPH) le phasage temporel entre deux injections, de manière à ce qu'au moins un pic (PBR) d'excitation spectrale de la pression de combustion soit éloigné de ladite fréquence critique ou dudit domaine fréquentiel critique (FCRIT).

2. Procédé de commande des injections suivant la revendication 1, **caractérisé en ce que** le phasage temporel entre deux injections est modifié pour que ledit pic (PBR) d'excitation spectrale de la pression de combustion soit éloigné de plus d'une distance prescrite de ladite fréquence critique ou domaine fréquentiel critique (FCRIT).

3. Procédé de commande des injections suivant l'une quelconque des revendications précédentes, **caractérisé en ce que** le calculateur (4) analyse le spectre fréquentiel du signal (SBR) de la pression de combustion correspondant aux deux injections, pour déterminer au moins une fréquence d'au moins un maximum de ce spectre, cette fréquence étant égale au pic (PBR) d'excitation spectrale de la pression de combustion.

4. Procédé de commande des injections suivant l'une quelconque des revendications précédentes, **caractérisé en ce que** pour modifier le phasage temporel entre deux injections, le calculateur (4) effectue une comparaison de la fréquence du pic (PBR) d'excitation spectrale de la pression de combustion à ladite fréquence critique ou audit domaine fréquentiel critique (FCRIT).

5. Procédé de commande des injections suivant l'une quelconque des revendications précédentes, **caractérisé en ce que** ladite fréquence critique ou dudit domaine fréquentiel critique (FCRIT) correspond à une fréquence prédéterminée de faiblesse de structure du groupe moto - propulseur comportant le moteur.

6. Procédé de commande des injections suivant l'une quelconque des revendications précédentes, **caractérisé en ce que** le motif de commande (MOT) comportant ledit phasage temporel prescrit entre deux injections est généré par une unité (2) de commande à partir d'une cartographie du moteur.

7. Procédé de commande des injections suivant l'une quelconque des revendications précédentes, **caractérisé en ce que** pour ladite modification, le calculateur (4) émet une commande (COMPH) de modification prescrite du phasage entre deux injections dans le même cycle, qui est ajoutée au motif (MOT) de commande des injections en grandeur (CONS) de consigne pour modifier le phasage entre deux injections dans la chambre (1) de combustion dans le même cycle.

8. Procédé de commande des injections suivant l'une quelconque des revendications précédentes, **caractérisé en ce que** la modification du phasage entre deux injections est inférieure ou égale à 5 ° d'angle de vilebrequin du moteur, de préférence inférieure ou égale à 3 ° d'angle de vilebrequin du moteur, de préférence encore inférieure ou égale à 2 ° d'angle de vilebrequin du moteur.

9. Dispositif de commande des injections d'un moteur à combustion interne, pour la mise en oeuvre du procédé suivant l'une quelconque des revendications précédentes, **caractérisé en ce qu'**il comprend
une unité (2) de commande pour la génération d'un motif de commande d'injection comportant au moins une première injection et une deuxième injection par cycle thermodynamique pour la chambre (1) de combustion d'au moins un des cylindres du moteur, ce motif de commande (MOT) comportant un phasage temporel prescrit entre deux injections,
un capteur (3) associé audit cylindre pour la fourniture d'un signal (SBR) représentatif de la pression de combustion dans la chambre (1) de combustion de celui-ci,
une mémoire (MEM) d'enregistrement d'au moins une fréquence critique ou d'un domaine fréquentiel critique (FCRIT) de la pression de combustion du cylindre,
des moyens (4) d'analyse du spectre fréquentiel du signal (SBR) de de la pression de combustion correspondant aux deux injections, pour déterminer au moins une fréquence d'au moins un maximum de ce spectre, cette fréquence étant égale au pic (PBR) d'excitation spectrale du bruit (BR) de combustion,
des moyens (COMP) de comparaison de la fréquence du pic (PBR) d'excitation spectrale de la pression de combustion à ladite fréquence critique ou audit domaine fréquentiel critique (FCRIT),
des moyens (COM) d'émission d'une commande (COMPH) de modification prescrite du phasage entre deux injections, qui est ajoutée au motif (MOT) de commande des injections en grandeur (CONS) de consigne pour modifier le phasage entre deux injections dans la chambre (1) de combustion dans le même cycle, de manière à ce que le pic (PBR) d'excitation spectrale de la pression de combustion soit éloigné de ladite fréquence critique ou dudit domaine fréquentiel critique (FCRIT).

10. Véhicule automobile comportant un moteur à combustion interne, comportant au moins un cylindre muni d'au moins un injecteur de carburant dans la chambre (1) de combustion du cylindre et d'un dispositif de commande de l'injecteur suivant une première injection pilote et une deuxième injection principale, **caractérisé en ce que** le dispositif de commande est suivant la revendication 9.

## Patentansprüche

1. Verfahren zur Steuerung der Einspritzung in einen Verbrennungsmotor, mit einem Muster der Einspritzsteuerung, das wenigstens eine erste Einspritzung und eine zweite Einspritzung pro thermodynamischen Zyklus für den Brennraum (1) wenigstens eines der Zylinder des Motors aufweist, wobei ein Sensor (3) der diesem Zylinder zugeordnet ist, ein Signal (SBR) liefert, das für den Verbrennungsdruck im Brennraum (1) desselben repräsentativ ist,
**dadurch gekennzeichnet, dass**
das Steuerungsmuster (MOT) einen vorgegebenen zeitlichen Abstand zwischen zwei Einspritzungen aufweist,
einem Rechner (4) wenigstens eine kritische Frequenz oder ein kritischer Frequenzbereich (FCRIT) des Verbrennungsdrucks des Zylinders vorgegeben wird, der Rechner die spektralen Informationen des Signals (SBR) des Verbrennungsdrucks verwendet, um den zeitlichen Abstand zwischen zwei Einspritzungen zu ändern (COMPH), derart, dass wenigstens eine Spitze (PBR) der spektralen Anregung des Verbrennungsdrucks von der kritischen Frequenz oder dem kritischen Frequenzbereich (FCRIT) entfernt ist.

2. Verfahren zur Steuerung der Einspritzung nach Anspruch 1, **dadurch gekennzeichnet, dass** der zeitliche Abstand zwischen zwei Einspritzungen so geändert wird, dass die Spitze (PBR) der spektralen Anregung des Verbrennungsdrucks um mehr als einen vorgegebenen Abstand von der kritischen Frequenz oder dem kritischen Frequenzbereich (FCRIT) entfernt ist.

3. Verfahren zur Steuerung der Einspritzung nach einem der vorhergehenden Ansprüche, **dadurch gekennzeichnet, dass** der Rechner (4) das Frequenzspektrum des Signals (SBR) des Verbrennungsdrucks analysiert, das den zwei Einspritzungen entspricht, um wenigstens eine Frequenz wenigstens eines Maximums dieses Spektrums zu bestimmen, wobei diese Frequenz gleich der Spitze (PBR) der spektralen Anregung des Verbrennungsdrucks ist.

4. Verfahren zur Steuerung der Einspritzung nach einem der vorhergehenden Ansprüche, **dadurch gekennzeichnet, dass**, um den zeitlichen Abstand zwischen zwei Einspritzungen zu ändern, der Rechner (4) einen Vergleich der Frequenz der Spitze (PBR) der spektralen Anregung des Verbrennungsdrucks mit der kritischen Frequenz oder mit dem kritischen Frequenzbereich (FCRIT) durchführt.

5. Verfahren zur Steuerung der Einspritzung nach einem der vorhergehenden Ansprüche, **dadurch gekennzeichnet, dass** die kritische Frequenz oder der kritische Frequenzbereich (FCRIT) einer vorbestimmten Frequenz einer Strukturschwäche des den Motor umfassenden Antriebsstranges entspricht.

6. Verfahren zur Steuerung der Einspritzung nach einem der vorhergehenden Ansprüche, **dadurch gekennzeichnet, dass** das Steuerungsmuster (MOT), das den vorgegebenen zeitlichen Abstand zwischen zwei Einspritzungen aufweist, von einer Steuereinheit (2) aus einem Kennfeld des Motors erzeugt wird.

7. Verfahren zur Steuerung der Einspritzung nach einem der vorhergehenden Ansprüche, **dadurch gekennzeichnet, dass** für diese Änderung der Rechner (4) einen Befehl (COMPH) für eine vorgegebene Änderung des Abstands zwischen zwei Einspritzungen in demselben Zyklus sendet, welche zu dem Steuerungsmuster (MOT) der Einspritzungen als Sollgröße (CONS) zum Ändern des Abstands zwischen zwei Einspritzungen in den Brennraum (1) in demselben Zyklus hinzugefügt wird.

8. Verfahren zur Steuerung der Einspritzung nach einem der vorhergehenden Ansprüche, **dadurch gekennzeichnet, dass** die Änderung des Abstands zwischen zwei Einspritzungen kleiner oder gleich 5° Kurbelwinkel des Motors, vorzugsweise kleiner oder gleich 3° Kurbelwinkel des Motors, noch stärker bevorzugt kleiner oder gleich 2° Kurbelwinkel des Motors ist.

9. Vorrichtung zur Steuerung der Einspritzung in einen Verbrennungsmotor, zur Durchführung des Verfahrens gemäß einem der vorhergehenden Ansprüche, **dadurch gekennzeichnet, dass** sie umfasst:
eine Steuereinheit (2) zur Erzeugung eines Musters der Einspritzsteuerung, das wenigstens eine erste Einspritzung und eine zweite Einspritzung pro thermodynamischen Zyklus für den Brennraum (1) wenigstens eines der Zylinder des Motors aufweist, wobei dieses Steuerungsmuster (MOT) einen vorgegebenen zeitlichen Abstand zwischen zwei Einspritzungen aufweist,
einen Sensor (3), der dem Zylinder zugeordnet ist, zum Liefern eines Signals (SBR), das für den Verbrennungsdruck im Brennraum (1) desselben repräsentativ ist,
einen Speicher (MEM) zur Speicherung wenigstens einer kritischen Frequenz oder eines kritischen Frequenzbereichs (FCRIT) des Verbrennungsdrucks des Zylinders,
Mittel (4) zur Analyse des Frequenzspektrums des Signals (SBR) des Verbrennungsdrucks, das den zwei Einspritzungen entspricht, um wenigstens eine Frequenz wenigstens eines Maximums dieses Spektrums zu bestimmen, wobei diese Frequenz gleich der Spitze (PBR) der spektralen Anregung des Verbrennungsgeräusches (BR) ist,
Mittel (COMP) zum Vergleich der Frequenz der Spitze (PBR) der spektralen Anregung des Verbrennungsdrucks mit der kritischen Frequenz oder mit dem kritischen Frequenzbereich (FCRIT),
Mittel (COM) zum Senden eines Befehls (COMPH) für eine vorgegebene Änderung des Abstands zwischen zwei Einspritzungen, welche zu dem Steuerungsmuster (MOT) der Einspritzungen als Sollgröße (CONS) zum Ändern des Abstands zwischen zwei Einspritzungen in den Brennraum (1) in demselben Zyklus hinzugefügt wird, derart, dass die Spitze (PBR) der spektralen Anregung des Verbrennungsdrucks von der kritischen Frequenz oder dem kritischen Frequenzbereich (FCRIT) entfernt ist.

10. Kraftfahrzeug, welches einen Verbrennungsmotor aufweist, der wenigstens einen Zylinder aufweist, der mit wenigstens einer Kraftstoffeinspritzeinrichtung im Brennraum (1) des Zylinders und mit einer Vorrichtung zur Steuerung der Einspritzeinrichtung gemäß einer ersten Piloteinspritzung und einer zweiten Haupteinspritzung ausgestattet ist, **dadurch gekennzeichnet, dass** die Vorrichtung zur Steuerung eine Vorrichtung zur Steuerung gemäß Anspruch 9 ist.

## Claims

1. Method for controlling injections in an internal combustion engine, having an injection control pattern comprising at least one first injection and one second injection per thermodynamic cycle for the combustion chamber (1) of at least one of the cylinders of the engine,
in which a sensor (3) associated with said cylinder supplies a signal (SBR) representative of the combustion pressure in the combustion chamber (1) thereof, **characterized in that**
the control pattern (MOT) comprising a prescribed temporal phasing between two injections,
a computer (4) is prescribed at least one critical frequency or one critical frequency domain (FCRIT) of the combustion pressure of the cylinder,
the computer uses the spectral information of said signal (SBR) of the combustion pressure to modify (COMPH) the temporal phasing between two injections, so that at least one peak (PBR) of spectral excitation of the combustion pressure is distanced from said critical frequency or from said critical frequency domain (FCRIT).

2. Method for controlling injections according to Claim 1, **characterized in that** the temporal phasing between two injections is modified for said peak (PBR) of spectral excitation of the combustion pressure to be distanced by more than a prescribed distance from said critical frequency or critical frequency domain (FCRIT).

3. Method for controlling injections according to either one of the preceding claims, **characterized in that** the computer (4) analyses the frequency spectrum of the signal (SBR) of the combustion pressure corresponding to the two injections, to determine at least a frequency of at least a maximum of this spectrum, this frequency being equal to the peak (PBR) of spectral excitation of the combustion pressure.

4. Method for controlling injections according to any one of the preceding claims, **characterized in that**, to modify the temporal phasing between two injections, the computer (4) performs a comparison of the frequency of the peak (PBR) of spectral excitation of the combustion pressure to said critical frequency or to said critical frequency domain (FCRIT).

5. Method for controlling injections according to any one of the preceding claims, **characterized in that** said critical frequency or said critical frequency domain (FCRIT) corresponds to a predetermined frequency of structural weakness of the power train including the engine.

6. Method for controlling injections according to any one of the preceding claims, **characterized in that** the control pattern (MOT) comprising said prescribed temporal phasing between two injections is generated by a control unit (2) from a mapping of the engine.

7. Method for controlling injections according to any one of the preceding claims, **characterized in that**, for said modification, the computer (4) issues a command (COMPH) for prescribed modification of the phasing between two injections in the same cycle, which is added to the injection control pattern (MOT) in terms of magnitude (CONS) of setpoint to modify the phasing between two injections in the combustion chamber (1) in the same cycle.

8. Method for controlling injections according to any one of the preceding claims, **characterized in that** the modification of the phasing between two injections is less than or equal to 5° of crankshaft angle of the engine, preferably less than or equal to 3° of crankshaft angle of the engine, even more preferably less than or equal to 2° of crankshaft angle of the engine.

9. Device for controlling injections in an internal combustion engine, for the implementation of the method according to any one of the preceding claims, **characterized in that** it comprises
a control unit (2) for generating an injection control pattern comprising at least one first injection and one second injection per thermodynamic cycle for the combustion chamber (1) of at least one of the cylinders of the engine, this control pattern (MOT) comprising a prescribed temporal phasing between two injections,
a sensor (3) associated with said cylinder for supplying a signal (SBR) representative of the combustion pressure in the combustion chamber (1) thereof,
a memory (MEM) storing at least one critical frequency or one critical frequency domain (FCRIT) of the combustion pressure of the cylinder,
means (4) for analysing the frequency spectrum of the signal (SBR) of the combustion pressure corresponding to the two injections, to determinine at least a frequency of at least a maximum of this spectrum, this frequency being equal to the peak (PBR) of spectral excitation of the combustion noise (BR),
means (COMP) for comparing the frequency of the peak (PBR) of spectral excitation of the combustion pressure to said critical frequency or to said critical frequency domain (FCRIT),
means (COM) for issuing a command (COMPH) for prescribed modification of the phasing between two injections, which is added to the injection control pattern (MOT) in terms of magnitude (CONS) of setpoint to modify the phasing between two injections in the combustion chamber (1) in the same cycle, so that the peak (PBR) of spectral excitation of the combustion pressure is distanced from said critical frequency or from said critical frequency domain (FCRIT).

10. Motor vehicle comprising an internal combustion engine, comprising at least one cylinder provided with at least one injector of fuel into the combustion chamber (1) of the cylinder and a device for controlling the injector according to a first pilot injection and a second main injection, **characterized in that** the control device is according to Claim 9.
